# EUROPEAN PATENT APPLICATION

(11) **EP 4 563 836 A1**
(43) Date of publication of application: **04.06.2025**
(21) Application number: 24204012.9
(22) Date of filing: 01.10.2024
(51) Int. Cl.: F16D 11/10, F16D 1/10, F16D 25/08

(54) **POSITIVE LOCKING PISTONS AND MANUAL ACTUATION OF MECHANICAL DECOUPLER SYSTEM**

(30) Priority: 01.12.2023 US 202318526558
(71) Applicant: Hamilton Sundstrand Corporation, Charlotte, NC 28217-4578 (US)
(72) Inventor: KOEHLER, Matthew Daniel, Rockford, IL, 61107 (US); CRAIG, Nicholas, Austin, TX, 78734 (US)
(74) Representative: Dehns

(57) **Abstract**

A system includes a decoupling shaft (114) engaged in a housing (122) for axial movement relative to the housing along a longitudinal axis of the decoupling shaft between a first position for coupling and a second position for decoupling. The decoupling shaft is engaged in the housing for rotational movement relative to the housing about the longitudinal axis. A first locking piston (144) is engaged to the housing, operatively connected to a first compartment of a pneumatic chamber of the housing. The first locking piston is biased radially inward to engage a first groove (148) in the decoupling shaft to lock the decoupling shaft in the second position. A second locking piston (152) is engaged to the housing, operatively connected to a second compartment of the pneumatic chamber. The second locking piston is biased radially inward to engage a second groove (156) in the decoupling shaft to lock the decoupling shaft in the first position.

## Description

### STATEMENT OF GOVERNMENT RIGHTS

This invention was made with government support under Contract No. SPE4AX-18-D-9407-FA8212-22-F-0003 awarded by the United States Air Force. The government has certain rights in the invention.

### BACKGROUND

### 1. Field

The present disclosure relates to disconnect mechanisms, and more particularly to mechanical disconnects for disconnecting power trains, such as can be used for disconnecting actuators, gearboxes, prime movers, accessories, and the like, aboard aircraft.

### 2. Description of Related Art

In power transmission devices, such as a gearboxes aboard aircraft, it is often necessary to include a mechanism that can mechanically separate two power train shafts that carry a rotational load between them. This can be done for a multitude of reasons including needing to run either the upstream or downstream components without driving the entire system and disconnecting the sections in the event that one component fails. It can sometimes be necessary to manually actuate the disconnect mechanism without electrical power or pneumatic air supply.

The conventional techniques have been considered satisfactory for their intended purpose. However, there is an ever present need for improved systems and methods for mechanical disconnects. This disclosure provides a solution for this need.

### SUMMARY

A system includes a decoupling shaft engaged in a housing for axial movement relative to the housing along a longitudinal axis of the decoupling shaft back and forth between a first position for coupling and a second position for decoupling. The decoupling shaft is engaged in the housing for rotational movement relative to the housing about the longitudinal axis. A first locking piston is engaged to the housing and is operatively connected to a first compartment of a pneumatic chamber of the housing. The first locking piston is biased radially inward to engage a first groove in the decoupling shaft to lock the decoupling shaft in the second position. A second locking piston is engaged to the housing and is operatively connected to a second compartment of the pneumatic chamber. The second locking piston is biased radially inward to engage a second groove in the decoupling shaft to lock the decoupling shaft in the first position.

The first locking piston can be configured to move radially outward against its bias with a first solenoid pressurizing the first compartment, to disengage the first locking piston from the first groove to allow axial movement of the first shaft assembly. A first locking piston switch can be mounted to the housing and can be operatively connected to the first locking piston to switch between a first switching state with the first locking piston engaged to the first groove, and a second switching state with the first locking piston disengaged from the first groove for use as an electrical sensor for detecting state of the decoupling shaft.

The second locking piston can be configured to move radially outward against its bias with the second solenoid pressurizing the second compartment, to disengage the second locking piston from the second groove to allow axial movement of the decoupling shaft. A second locking piston switch can be mounted to the housing and can be operatively connected to the second locking piston to switch between a first switching state with the second locking piston engaged to the second groove, and a second switching state with the second locking piston disengaged from the second groove for use as an electrical sensor for detecting state of the decoupling shaft. A controller can be operatively connected to the first locking piston switch and to the second locking piston switch for remote detection of state of the decoupling shaft between the first and second positions.

The first and second grooves can be spaced axially apart by a first distance. The first and second locking pistons can be spaced axially apart by a second distance. The first and second distances can be configured so there is no position of the decoupling shaft between the first and second positions wherein the first and the second locking pistons can engage the first and second grooves atone time.

An anti-rotation pin can be mounted in the housing. The anti-rotation pin can be engaged in a diametrical groove through a decoupling shaft to prevent rotation of the decoupling shaft relative to the housing during pneumatic operation. The anti-rotation pin can be configured to be manually removed from the solenoid housing for manual rotation of the decoupling shaft. A set of axially extending helical threads in the first end of the decoupling shaft can be configured to engage a bolt to facilitate manual axial actuation of the decoupling shaft.

The first groove can include a first cam with a first camming surface extending circumferentially around the decoupling shaft. With the anti-rotation pin can be engaged to the decoupling shaft and to the housing, the first groove can have a deep section of the first cam circumferentially aligned with the first locking piston for selectively locking and unlocking the first locking piston from the first groove for remotely controlled pneumatic operation. The first cam can include a first tangent portion that is tangent to a first portion of the decoupling shaft axially adjacent to the first groove for manual operation with the anti-rotation pin removed and with the decoupling shaft rotated to circumferentially align the first tangent portion with the first locking piston.

The second groove can include a second cam with a second camming surface extending circumferentially around the decoupling shaft. With the anti-rotation pin engaged to the decoupling shaft and to the housing, the second groove can have a deep section of the second cam circumferentially aligned with the second locking piston for selectively locking and unlocking the second locking piston from the first groove for remotely controlled pneumatic operation. The second cam can include a second tangent portion that is tangent to a second portion of the decoupling shaft axially adjacent to the second groove for manual operation with the anti-rotation pin removed and with the decoupling shaft rotated to circumferentially align the second tangent portion with the second locking piston. The decoupling shaft can be configured so rotation of the decoupling shaft about the longitudinal axis by 90-degrees from an initial position with the anti-rotation pin in place positions the first and second cams to circumferentially align the first and second tangent portions with the first and second locking pistons for manual actuation of the decoupling shaft.

A controller can be operatively connected to a first locking piston switch and to a second locking piston switch for remote detection of state of the decoupling shaft between the first and second positions. The controller can be configured to indicate/output an unknown state of the decoupling shaft upon receipt of input from the first and second locking piston switches indicating neither of the first and second locking pistons are fully seated in the first or second grooves.

The decoupling shaft can be apart of a first shaft assembly. A second shaft can be splined to the first shaft assembly with the first shaft assembly in the first axial position for common rotation of the first shaft assembly and the second shaft. In a second axial position of the first shaft assembly, the first shaft assembly and the second shaft can be separated for disconnecting the decoupling shaft and the second shaft. The first shaft assembly can include a pneumatic piston in a pneumatic chamber of the housing. The pneumatic piston can separate between the first groove and the second groove and can be configured so that pressurizing a first compartment of the pneumatic chamber on a first side of the pneumatic piston can actuate the first shaft assembly axially toward the first position, and pressurizing a second compartment of the pneumatic chamber on a second side of the piston opposite the first side of the piston can actuate the first shaft assembly axially toward the second position.

A first solenoid valve can be in fluid communication with the first compartment for selectively pressuring the first compartment to drive the piston to actuate the first shaft assembly toward the first position. A second solenoid valve can be in fluid communication with the second compartment for selectively pressurizing the second compartment to drive the piston to actuate the first shaft assembly toward the second position.

The first shaft assembly can include a first set of splines extending radially outward. The second shaft can include a second set of splines extending radially inward. The first set of splines can engage the second set of splines with the first shaft assembly in the first position. The first shaft assembly can include a decoupler bearing engaging the first set of splines to the decoupling shaft of the first shaft assembly for rotation of the decoupling shaft relative to the first set of splines. The first set of splines can be defined on a coupling shaft of the first shaft assembly that is operatively connected to a power input shaft for driving the first and second shafts with rotational power from a prime mover with the first shaft assembly in the first position.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic cross-sectional side elevation view of an embodiment of a system constructed in accordance with the present disclosure, showing the first and second shafts engaged for common rotation;
Fig. 2 is a schematic cross-sectional side-elevation view of the system of Fig. 1, showing the first and second shafts disconnected;
Fig. 3 is a schematic cross-sectional side-elevation view of a portion of the system of Fig. 1, showing the locking pistons;
Fig. 4 is a perspective view of the system of Fig. 1, showing the solenoid housing externally;
Fig. 5 is a schematic perspective view of the system of Fig. 4, showing solenoid housing internals;
Fig. 6 is a schematic perspective view of a portion of the system of Fig. 1, showing the decoupling shaft in the first position with the cams rotated for pneumatic operation;
Fig. 7 is a schematic perspective view of a portion of the system of Fig. 1, showing the decoupling shaft in the second position with the cams rotated for pneumatic operation;
Fig. 8 is a schematic axial end view of a portion of the system of Fig. 1, showing the cam in the position for pneumatic operation;
Fig. 9 is a schematic axial end view of a portion of the system of Fig. 1, showing the cam rotating between positions for pneumatic and manual operation;
Fig. 10 is a schematic axial end view of a portion of the system of Fig. 1, showing the cam in the position for manual operation;
Fig. 11 is a schematic perspective view of a portion of the system of Fig. 1, showing the anti-rotation pin engaged in the decoupling shaft for pneumatic operation; and
Fig. 12 is a schematic perspective view of a portion of the system of Fig. 1, showing a threaded bolt engaged to the helical threads of the decoupling shaft for manual operation.

### DETAILED DESCRIPTION OF THE PREFERRED EMBODIMENTS

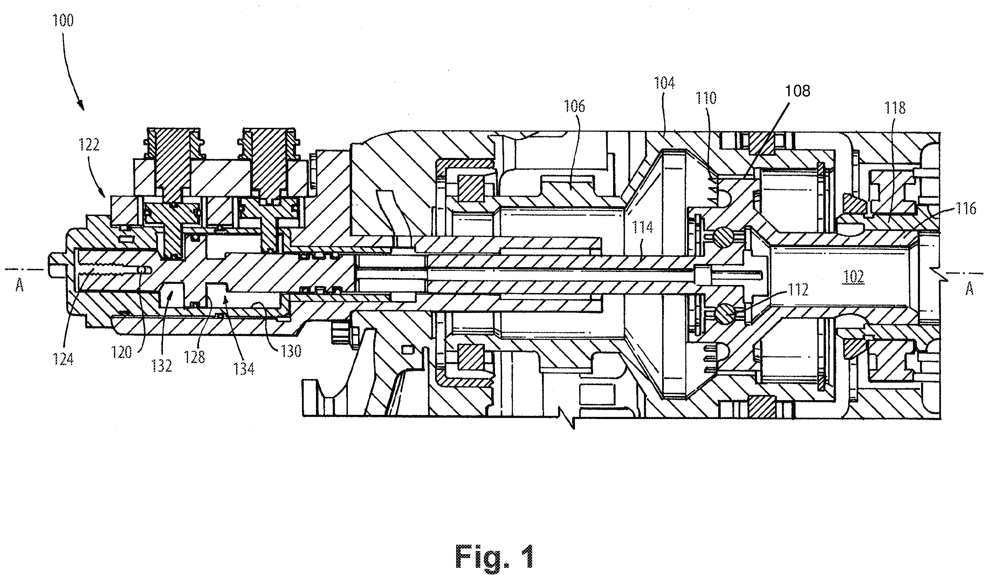

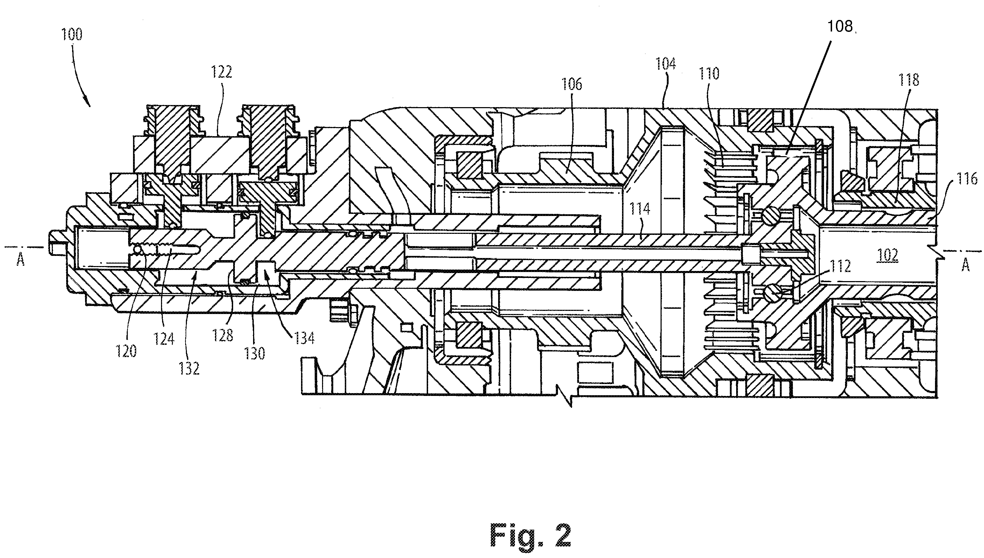

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Figs. 2-12, as will be described. The systems and methods described herein can be used to facilitate manual actuation of a disconnect mechanism.

The system 100 disclosed herein mechanically separates two rotating shafts, in both static and loaded operation, through a remote command. In this case the decoupler is configured for an Airframe Mounted Accessory Drive (AMAD) such that the gearbox can be disconnected from the input shaft on command, however, those skilled in the art will readily appreciate that any other suitable disconnect application can be used. This can be particularly useful for the following events common in such a system: maintenance or operation of one side without driving the other, and emergency disconnect such as while operating at maximum load to allow continued function of one side. The decoupler is centered around a spline that connects the input shaft to the drive shaft. When coupled the splines are engaged, when decoupled the spline shifts axially to a completely disengaged position allowing for both the input shaft and drive shaft to spin independently. The actuation is completed by a pneumatically driven piston system with sensors to reflect the current state of the decoupler.

The system 100 includes a first shaft assembly 102 and a second shaft 104 splined to the first shaft assembly when the first shaft assembly is in a first axial position relative to the longitudinal axis A defined by the shafts 102, 104. This position is shown in Fig. 1, and is for common rotation of the first and second shafts 102, 104, i.e. in the coupled state. In a second axial position of the first shaft assembly 102, the first shaft assembly 102 and the second shaft 104 are separated for disconnecting the first and second shafts 102, 104 for the decoupled state. The decoupled state is shown in Fig. 2.

With continued reference to Figs. 1 and 2, the second shaft 104 includes a spur gear 106 configured to connect the second shaft for rotation together with an airframe mounted accessory drive (AMAD). The first shaft assembly 102 includes a first set of splines 108 extending radially outward from the coupling shaft 116 of the first shaft assembly 102. The second shaft 104 includes a second set of splines 110 extending radially inward. The first set of splines 108 engages the second set of splines 110 with the first shaft assembly 102 in the first position as shown in Fig. 1. The splines 108, and 110 are axially spaced apart in the decoupled state shown in Fig. 2. The first shaft assembly 102 includes a decoupler bearing 112 engaging the first set of splines 108 to a decoupling shaft 114 of the first shaft assembly 102 for rotation of the decoupling shaft 114 relative to the first setof splines 108. During coupled rotation of the shafts 104, 116, the decoupling shaft 114 of the first shaft assembly 102 does not rotate relative to the solenoid housing 122, while the coupling shaft 116 of the first shaft assembly 102 rotates relative to the decoupling shaft 114 accommodated by the decoupler bearing 112. The bearing 112 can also accommodate rotation as needed for manual disengagement of the first shaft assembly 102 from the second shaft 104.

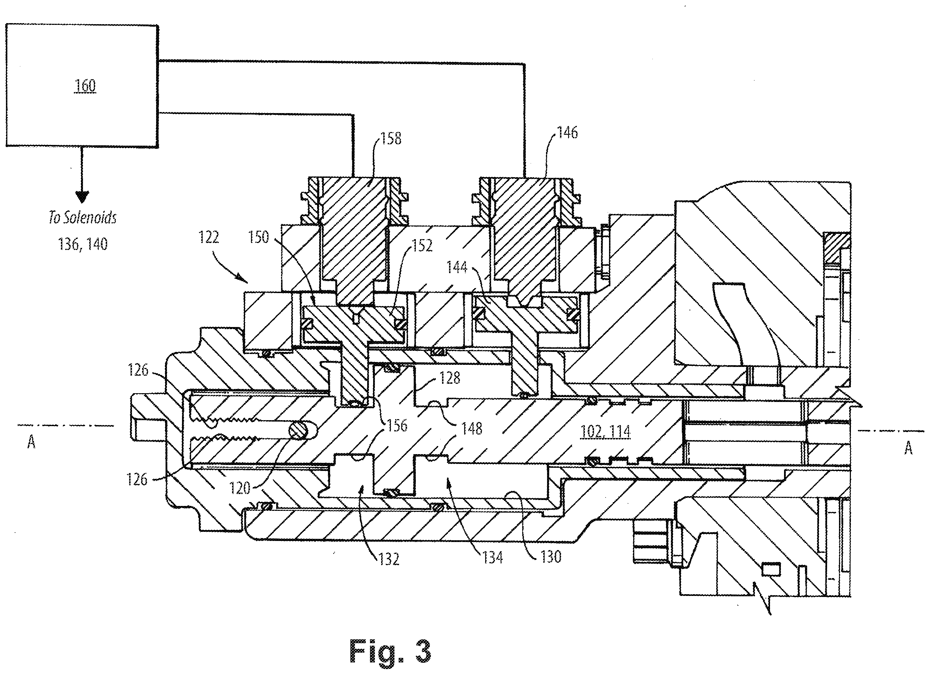

The first set of splines 108 are defined on a coupling shaft 116 of the first shaft assembly 102 that is operatively connected to a power input shaft 118 used for driving the coupled shafts 104, 116 with rotational power from a prime mover with the first shaft assembly 102 in the first position shown in Fig. 1. An anti-rotation pin 120 is mounted in the solenoid housing 122 of the system 100. The anti-rotation pin 120 is mounted in the pressure cap 176, which is installed into the solenoid housing 122 of the system 100. The anti-rotation pin 120 is engaged in a diametrical groove 124 through a first end of the decoupling shaft 114 to prevent rotation of the decoupling shaft 114 of the first shaft assembly 102 relative to solenoid housing 122 for pneumatic operation. The anti-rotation pin 120 is configured to be manually removed from the solenoid housing 122 for manual rotation of the decoupling shaft 114 of the first shaft assembly 102 relative to the coupling shaft 116 of the first shaft assembly 102 as needed, e.g. for maintenance. A set of axially extending helical threads 126 (labeled in Fig. 3) in the first end of the decoupling shaft 114 are configured to engage a threaded bolt to facilitate manual axial actuation of the first shaft assembly to the second position of Fig. 2 to manually disengage the splines 108, 110.

The decoupling shaft 114 includes a piston 128 in a pneumatic chamber 130 configured so that pressurizing a first compartment 134 of the pneumatic chamber on a first side of the pneumatic piston 128 actuates the first shaft assembly 102 axially toward the first position of Fig. 1, and pressurizing a second compartment 132 of the pneumatic chamber 130 on a second side of the piston 128 opposite the first side of the piston 128 actuates the first shaft assembly 102 axially toward the second position of Fig. 2.

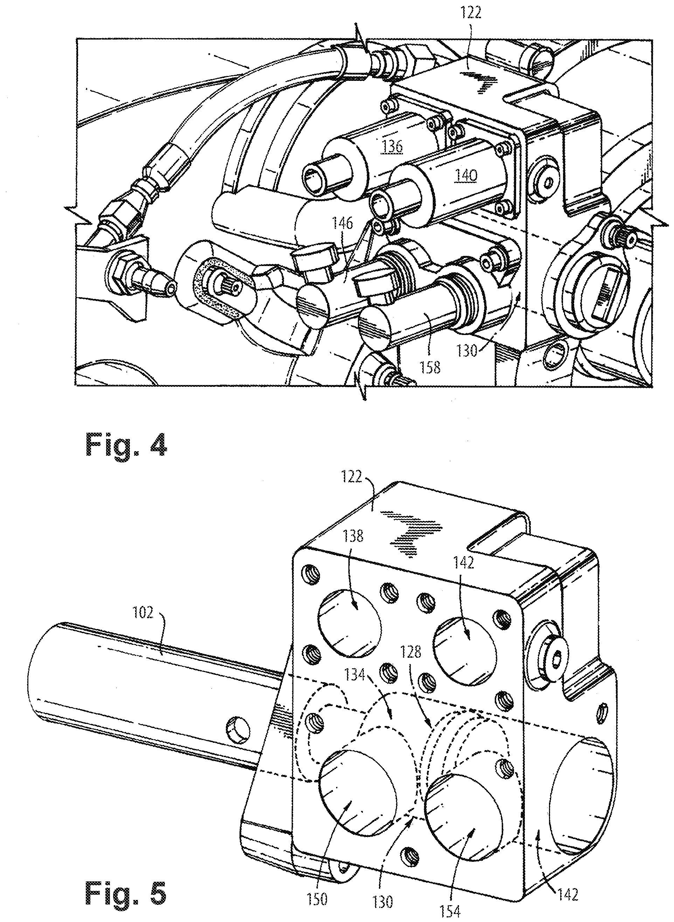

With reference to Fig. 4-5 (where Fig. 4 shows an external view and Fig. 5 schematically shows internals), a first solenoid valve 136 is in fluid communication with the first compartment 134 (labeled in Figs. 1-3) through a solenoid passage 138 for selectively pressuring the first compartment 134 to drive the piston 128 to actuate the first shaft assembly 102 toward the first position of Fig. 1. A second solenoid valve 140 is in fluid communication through a solenoid passage 142 with the second compartment 132 for selectively pressurizing the second compartment 132 to drive the piston 128 to actuate the first shaft assembly 102 toward the second position as shown in Fig 2. The second solenoid valve 140 is configured to release pressure from the second compartment 132 to allow movement of the piston 128 toward the first position shown in Fig. 1. Similarly, the first solenoid valve 136 is configured to release pressure from the first compartment 134 to allow movement of the piston 128 toward the second position shown in Fig. 2. The first solenoid valve 136 and second solenoid valve 140 are each mounted to the solenoid housing 130, which defines the pneumatic chamber 130.

With reference now to Fig. 3, a first locking piston 144 is engaged to the solenoid housing 122 in a piston chamber 150 and is operatively connected to the first compartment 134. The first locking piston 144 is biased radially inward, e.g. by a spring in switch 146, to engage a first groove 148 in the first shaft assembly to lock the first shaft assembly in the second position as shown in Fig. 2. The first locking piston 144 is configured to move radially outward against its bias with the first solenoid 136 (shown in Fig. 4) pressurizing the first compartment 134, to disengage the first locking piston 144 from the first groove 148 to allow axial movement of the first shaft assembly 102 out of the second position shown in Fig. 2. The first locking piston switch 146 is mounted to the solenoid housing 122 and operatively connected to the first locking piston 144 to switch between a first switching state with the first locking piston 144 engaged to the first groove 148, and a second switching state with the first locking piston 144 disengaged from the first groove 148 for use as an electrical sensor for detecting state/position of the first shaft assembly 102.

A second locking piston 152 is engaged in a piston chamber 154 (labeled in Fig. 5) of the solenoid housing 122 and is operatively connected to the second compartment 132. The second locking piston 152 is biased, e.g. by a spring in the switch 158, radially inward to engage a second groove 156 in the first shaft assembly 102 to lock the first shaft assembly 102 in the first position shown in Figs. 1 and 3. The second locking piston 152 is configured to move radially outward against its bias with the second solenoid 140 (labeled in Fig. 4) pressurizing the second compartment 132, to disengage the second locking piston 152 from the second groove 156 to allow axial movement of the first shaft assembly 102 away from the first position of Figs. 1 and 3. The second locking piston switch 158 is mounted to the solenoid housing 122 and operatively connected to the second locking piston 152 to switch between a first switching state with the second locking piston 152 engaged to the second groove 156, and a second switching state with the second locking piston 152 disengaged from the second groove 156 for use as an electrical sensor for detecting state of the first shaft assembly 102. A controller 160 is operatively connected to the first and second solenoids 136, 140 for remote actuation of the first shaft assembly 102 back and forth between the first and second positions to couple/decouple the splines 108, 110 as indicated in Figs. 1-2. The controller 160 is also operatively connected to both switches 146, 158 for confirming state of the first shaft assembly 102, e.g. for remotely determining the state of the decoupling shaft 114 among or between the first and second positions.

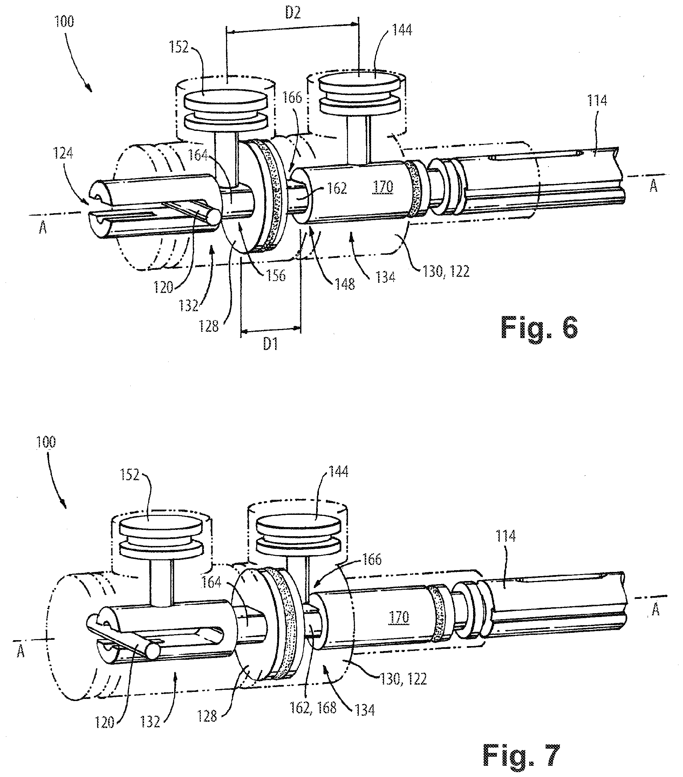

Figs. 6-7 show the pneumatic operation of the system, with Fig. 6 showing the first position also shown in Fig. 1, and Fig. 7 showing the second position also shown in Fig. 2. The first and second grooves 148, 156 are spaced axially apart by a first distance D1, with the pneumatic piston 128 separating the grooves 148, 156. The first and second locking pistons 144, 152 are spaced axially apart by a second distance D2. The first and second distances D1 and D2 are configured so there is no position of the decoupling shaft 114 between the first and second positions wherein the first and the second locking pistons 144, 152 can engage the first and second grooves 148, 156 at the same time.

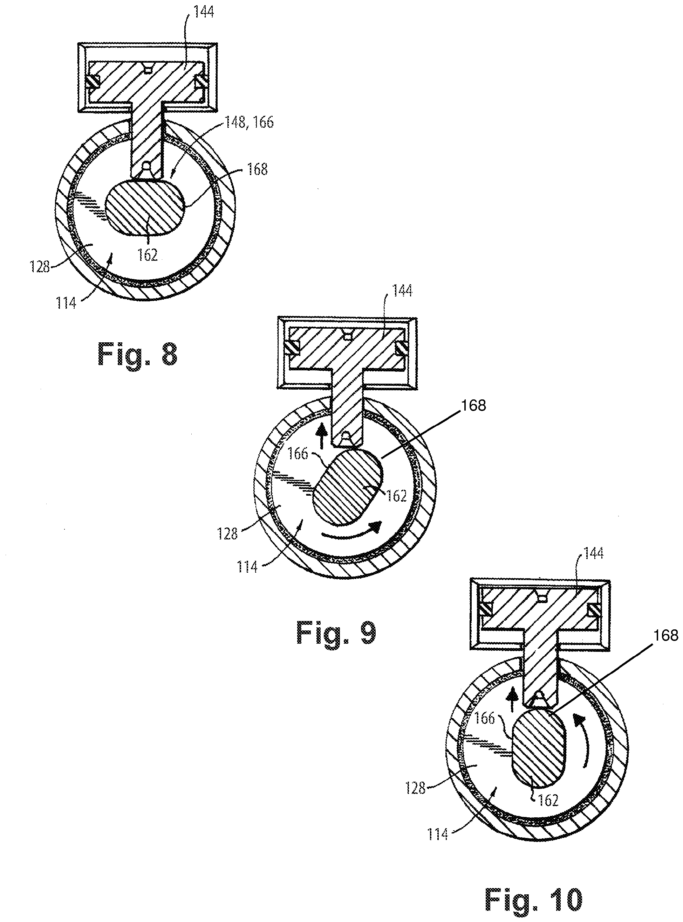

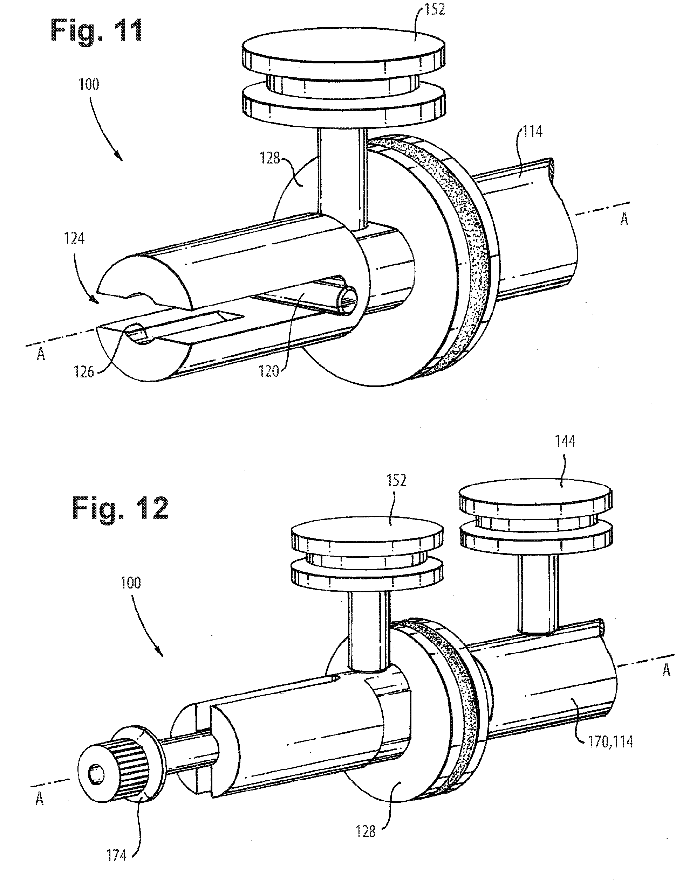

The first groove 148 includes a first cam 162 with a first camming surface extending circumferentially around the decoupling shaft 114. With the anti-rotation pin 20 engaged to the groove 124 of the decoupling shaft 114 and to the housing 122 (as shown in Figs. 1 and 2), the first groove 148 has a deep section 166 of the first cam 162 circumferentially aligned as with the first locking piston 144 for selectively locking and unlocking the first locking piston 144 from the first groove 148 for remotely controlled pneumatic operation. The circumferential alignment of the deep section 166 of the first cam 162 with the first locking piston 144 is shown in both Figs. 6 and 7, but in Fig. 7 the deep section 166 is also axially aligned with the locking piston 144 so the locking piston locks in the first groove 148. The first cam 162 includes a first tangent portion 168 that is tangent to a first circular portion 170 of the decoupling shaft axially adjacent to the first groove 148. With the locking piston 144 seated in the deep portion 166 of the groove 148, manually rotating the decoupling shaft 114 90-degrees counter clockwise from the position shown in Fig. 8, through the position shown in Fig. 9, to the position in Fig. 10 cams the locking piston 144 outward against the tangent portion 168 of the cam 166, releasing the piston from the groove 148 for manual operation. This can be done with the anti-rotation pin removed, i.e. released from its locked position relative to the housing 122. With the decoupling shaft 114 rotated to circumferentially align the first tangent portion 168 with the first locking piston 144, manual actuation in the axial direction moves the locking piston 144 over the first circular portion 170, as shown in Fig. 12. The second groove 156 has a similar cam 164, which is circumferentially aligned with the first cam 162 so that rotating the decoupling shaft to the position shown in Fig. 10 releases both locking pistons 144, 152.

Returning the system 100 from manual operation back to pneumatic, remotely controlled operation, includes rotation of the decoupling shaft 114 about the longitudinal axis A by 90-degrees to return to the position shown in Fig. 8. The cams 162, 164 are configured so clockwise or counter-clockwise rotation gives the same result. The controller 160 (labeled in Fig. 3) is configured to indicate/output an unknown state of the decoupling shaft 114 upon receipt of input from the first and second locking piston switches 146, 158 indicating the neither of the first and second locking pistons 144, 152 are fully seated in the grooves 148, 156. Figs. 11 and 12 show camming of the second locking piston 152 from its pneumatic operation state in Fig. 11 to its state for manual operation in Fig. 12, where the second locking piston 152 is free to slide axially along the circular portion 172 of the decoupling shaft 114 as the first locking piston 144 is free to slide axially along the circular portion 170. A threaded bolt 174 is shown in Fig. 12 threaded into the threads 126 (labeled in Fig. 11) of the decoupling shaft 114 to facilitate manual actuation.

Systems and methods as disclosed herein provide potential benefits including the following. The cams allow for manual actuation when no power is available to the system. The manual actuation does not require unique tooling. The system can automatically correct to a locked or unlocked state.

The methods and systems of the present disclosure, as described above and shown in the drawings, provide for facilitated manual actuation of a disconnect mechanism. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system comprising:
decoupling shaft (114) engaged in a housing (122) for axial movement relative to the housing along a longitudinal axis of the decoupling shaft back and forth between a first position for coupling and
a second position for decoupling, wherein the decoupling shaft is engaged in the housing for rotational movement relative to the housing about the longitudinal axis;
a first locking piston (144) engaged to the housing and operatively connected to a first compartment (134) of a pneumatic chamber of the housing, wherein the first locking piston is biased radially inward to engage a first groove (148) in the decoupling shaft to lock the decoupling shaft in the second position; and
a second locking piston (152) engaged to the housing and operatively connected to a second compartment (132) of the pneumatic chamber, wherein the second locking piston is biased radially inward to engage a second groove (156) in the decoupling shaft to lock the decoupling shaft in the first position.

2. The system as recited in claim 1, wherein the first locking piston (144) is configured to move radially outward against its bias with a first solenoid pressurizing the first compartment (134), to disengage the first locking piston from the first groove (148) to allow axial movement of the first shaft assembly.

3. The system as recited in claim 2, further comprising a first locking piston switch (146) mounted to the housing (122) and operatively connected to the first locking piston (144) to switch between a first switching state with the first locking piston engaged to the first groove, and a second switching state with the first locking piston disengaged from the first groove for use as an electrical sensor for detecting state of the decoupling shaft.

4. The system as recited in claim 3, wherein the second locking piston (152) is configured to move radially outward against its bias with the second solenoid pressurizing the second compartment (132), to disengage the second locking piston from the second groove (156) to allow axial movement of the decoupling shaft.

5. The system as recited in claim 4, further comprising a second locking piston switch (158) mounted to the housing (122) and operatively connected to the second locking piston (152) to switch between a first switching state with the second locking piston engaged to the second groove (156), and a second switching state with the second locking piston disengaged from the second groove for use as an electrical sensor for detecting state of the decoupling shaft; and optionally, the system further comprising a controller (160) operatively connected to the first locking piston switch (146) and to the second locking piston switch (158) for remote detection of state of the decoupling shaft between the first and second positions.

6. The system as recited in claim 1, wherein the first and second grooves are spaced axially apart by a first distance, wherein the first and second locking pistons are spaced axially apart by a second distance, wherein the first and second distances are configured so there is no position of the decoupling shaft between the first and second positions wherein the first and the second locking pistons can engage the first and second grooves at one time.

7. The system as recited in claim 1, further comprising an anti-rotation pin (20) mounted in the housing (122), wherein the anti-rotation pin is engaged in a diametrical groove (124) through a decoupling shaft to prevent rotation of the decoupling shaft relative to the housing for pneumatic operation.

8. The system as recited in claim 7, wherein the anti-rotation pin (20) is configured to be manually removed from the solenoid housing (122) for manual rotation of the decoupling shaft; and optionally:
further comprising a set of axially extending helical threads (126) in the first end of the decoupling shaft configured to engage a bolt to facilitate manual actuation of the decoupling shaft.

9. The system as recited in claim 7, wherein the first groove (148) includes a first cam (162) with a first camming surface extending circumferentially around the decoupling shaft, and wherein with the anti-rotation pin (20) engaged to the decoupling shaft and to the housing, the first groove has a deep section (166) of the first cam circumferentially aligned with the first locking piston (144) for selectively locking and unlocking the first locking piston from the first groove for remotely controlled pneumatic operation, and wherein the first cam includes a first tangent portion (168) that is tangent to a first portion of the decoupling shaft axially adjacent to the first groove for manual operation with the anti-rotation pin removed and with the decoupling shaft rotated to circumferentially align the first tangent portion with the first locking piston.

10. The system as recited in claim 9, wherein the second groove (156) includes a second cam (164) with a second camming surface extending circumferentially around the decoupling shaft, and wherein with the anti-rotation pin (20) engaged to the decoupling shaft and to the housing, the second groove has a deep section of the second cam circumferentially aligned with the second locking piston for selectively locking and unlocking the second locking piston from the first groove (148) for remotely controlled pneumatic operation, and wherein the second cam includes a second tangent portion that is tangent to a second portion of the decoupling shaft axially adjacent to the second groove for manual operation with the anti-rotation pin removed and with the decoupling shaft rotated to circumferentially align the second tangent portion with the second locking piston.

11. The system as recited in claim 10, wherein the decoupling shaft is configured so rotation of the decoupling shaft about the longitudinal axis by 90-degrees from an initial position with the anti-rotation pin (20) in place positions the first and second cams (162, 164) to circumferentially align the first and second tangent portions with the first and second locking pistons (144, 152) for manual actuation of the decoupling shaft; and optionally:
further comprising a controller (160) operatively connected to a first locking piston switch (146) and to a second locking piston switch (158) for remote detection of state of the decoupling shaft between the first and second positions, wherein the controller is configured to indicate an unknown state of the decoupling shaft upon receipt of input from the first and second locking piston switches indicating neither of the first and second locking pistons are fully seated.

12. The system as recited in claim 10, wherein the decoupling shaft is a part of a first shaft assembly, and further comprising:
a second shaft (104) splined to the first shaft assembly with the first shaft assembly in the first axial position for common rotation of the first shaft assembly and the second shaft, wherein in a second axial position of the first shaft assembly, the first shaft assembly and the second shaft are separated for disconnecting the decoupling shaft and the second shaft;
wherein the first shaft assembly includes a pneumatic piston (128) in a pneumatic chamber of the housing, wherein the pneumatic piston separates between the first groove (148) and the second groove (156) and is configured so that:
pressurizing a first compartment of the pneumatic chamber on a first side of the pneumatic piston actuates the first shaft assembly axially toward the first position, and
pressurizing a second compartment of the pneumatic chamber on a second side of the piston opposite the first side of the piston actuates the first shaft assembly axially toward the second position.

13. The system as recited in clam 12, further comprising a first solenoid valve (136) in fluid communication with the first compartment (134) for selectively pressuring the first compartment to drive the piston to actuate the first shaft assembly toward the first position.

14. The system as recited in claim 13, further comprising a second solenoid valve (140) in fluid communication with the second compartment (132) for selectively pressurizing the second compartment to drive the piston to actuate the first shaft assembly toward the second position.

15. The system as recited in claim 14, wherein the first shaft assembly includes a first set of splines (108) extending radially outward, and wherein the second shaft includes a second set of splines (110) extending radially inward, wherein the first set of splines engages the second set of splines with the first shaft assembly in the first position; and/or:
wherein the first shaft assembly includes a decoupler bearing engaging the first set of splines to a decoupling shaft of the first shaft assembly for rotation of the decoupling shaft relative to the first set of splines; and optionally:
wherein the first set of splines are defined on a coupling shaft of the first shaft assembly that is operatively connected to a power input shaft for driving the first and second shafts with rotational power from a prime mover with the first shaft assembly in the first position.
